**Europäisches Patentamt**

**European Patent Office**

**Office européen des brevets**

(19)

(11) Veröffentlichungsnummer : **0 402 596 B1**

(12)

# EUROPÄISCHE PATENTSCHRIFT

(45) Veröffentlichungstag der Patentschrift :
09.06.93 Patentblatt 93/23

(51) Int. Cl.⁵ : **C01B 25/32**

(21) Anmeldenummer : **90107770.1**

(22) Anmeldetag : **24.04.90**

(54) Verfahren und Anlage zur Herstellung von Dicalciumphosphat.

(30) Priorität : **13.05.89 DE 3915746**

(43) Veröffentlichungstag der Anmeldung :
**19.12.90 Patentblatt 90/51**

(45) Bekanntmachung des Hinweises auf die
Patenterteilung :
**09.06.93 Patentblatt 93/23**

(84) Benannte Vertragsstaaten :
**BE DE FR GB**

(56) Entgegenhaltungen :
EP-A- 0 017 784
EP-A- 0 240 880
EP-A- 0 280 077

(73) Patentinhaber : **HOECHST
AKTIENGESELLSCHAFT
Postfach 80 03 20
W-6230 Frankfurt am Main 80 (DE)**

(72) Erfinder : **Buhl, Horst, Dr.
Nachtigallenweg 12
W-5042 Erftstadt (DE)**
Erfinder : **Holz, Josef
Theodor-Heuss-Strasse 3
W-5042 Erftstadt (DE)**
Erfinder : **Dany, Franz-Josef, Dr.
Heddinghovener Strasse 47
W-5042 Erftstadt (DE)**

EP 0 402 596 B1

Jouve, 18, rue Saint-Denis, 75001 PARIS

## Beschreibung

Die vorliegende Erfindung betrifft ein Verfahren zur Herstellung von mit Dimagnesiumphosphat-trihydrat und Natriumpyrophosphat stabilisiertem Dicalciumphosphat-dihydrat, wobei man in einen mit Rührwerk versehenen Reaktor eine wäßrige Suspension von Calciumcarbonat einträgt und über ein mit dem unteren und dem oberen Bereich des Reaktors strömungsmäßig verbundenes hochtouriges Mischorgan mit einer Leistung von mehr als 3000 Upm im Kreislauf pumpt und wobei man in das Mischorgan eine mindestens zur quantitativen Bildung von Dicalciumphosphat-dihydrat ausreichende Menge Phosphorsäure einbringt und wobei man anschließend in den Reaktor eine Magnesiumverbindung einträgt und wobei man schließlich eine alkalische Flüssigkeit in den Reaktor bis zu einem pH-Wert von maximal 6,9 dosiert, bevor man Natriumpyrophosphat in den Reaktor einträgt sowie eine Anlage zur Durchführung des Verfahrens.

Aus der CA-A- 1 090 531 ist ein Verfahren zur Herstellung von stabilisiertem Dicalciumphosphat-dihydrat bekannt, bei welchem in einem mit Rührwerk und Doppelmantel versehenen Reaktor Wasser vorgelegt und unter intensivem Rühren eine Lösung oder eine Suspension einer Calciumverbindung sowie Orthophosphorsäure in etwa stöchiometrischem Verhältnis unter Bildung von Dicalciumphosphat-dihydrat eingetragen werden. Als Stabilisator wird auf das Dicalciumphosphat-dihydrat zunächst Dimagnesiumphosphat-trihydrat durch Eintragen von Magnesiumsalzlösung, Orthophosphorsäure und Natronlauge aufgefällt, bis sich ein pH-Wert oberhalb von 8 einstellt. Als weiterer Stabilisator wird eine kleine Menge von feinteiligem Tetranatriumpyrophosphat zugegeben. Nach weiterem Rühren wird schließlich der Niederschlag abfiltriert, getrocknet und gemahlen.

Gemäß der DE-A 37 05 845 wird dieses bekannte Verfahren in der Weise weitergebildet, daß als Calciumverbindung ein gefälltes Calciumcarbonat mit einem mittleren Korndurchmesser von maximal 20 μm verwendet wird, wobei die Calciumcarbonatsuspension aus dem unteren Bereich des Reaktors entnommen und über eine Kreislaufleitung, in der sich ein hochtouriges Mischorgan mit einer Leistung von mehr als 3000 Upm befindet, in den oberen Bereich des Reaktors zurückfließt und wobei sowohl die Phosphorsäure als auch später die Magnesiumsalzlösung über das hochtourige Mischorgan eingebracht werden.

Nachteilig ist bei dem zuletzt genannten Verfahren, daß die Abtrennung des Feststoffes mit den bekannten mechanischen Trennapparaten entweder nur eine thixotrope Masse mit niedriger Adsorptivität liefert oder - falls eine gute Fest-Flüssig-Trennung gelingt - der getrocknete Feststoff einer Mahlung bedarf, durch die die mit dem Verfahren erzielte hohe Adsorptivität des Dicalciumphosphat-dihydrats beträchtlich erniedrigt wird.

Es ist daher Aufgabe der vorliegenden Erfindung, ein Verfahren zur Herstellung von stabilisiertem Dicalciumphosphat-dihydrat anzugeben, wobei man in einen Reaktor eine wäßrige Suspension von Calciumcarbonat einträgt und über ein mit dem unteren und dem oberen Bereich des Reaktors strömungsmäßig verbundenes hochtouriges Mischorgan mit einer Leistung von mehr als 3000 Upm im Kreislauf pumpt, in das Mischorgan ein mindestens zur quantitativen Bildung von Dicalciumphosphat-Dihydrat ausreichende Menge Phosphorsäure einbringt, anschließend in den Reaktor eine Magnesiumverbindung einträgt, eine alkalische Flüssigkeit in den Reaktor dosiert und schließlich den insgesamt gebildeten Niederschlag von der Mutterlauge abtrennt, bei welchem das stabilisierte Dicalciumphosphat-dihydrat als rieselfähiges Pulver erhalten wird. Das wird erfindungsgemäß dadurch erreicht, daß das hochtourige Mischorgan mit einer Leistung von 3500 bis 8000 Upm, vorzugsweise von 5000 bis 7000 Upm, betrieben wird; daß die Magnesiumverbindung sauerstoffhaltig ist; daß die alkalische Flüssigkeit Kalkmilch ist und daß die resultierende Suspension mit einem Gehalt an stabilisiertem Dicalciumphosphat-dihydrat von 20 bis 33 Gewichts% sprühgetrocknet wird.

Das Verfahren gemäß der Erfindung kann weiterhin wahlweise auch noch dadurch ausgestaltet sein, daß

a) die Magnesiumverbindung festes Magnesiumoxid ist;

b) die Magnesiumverbindung in Phosphorsäure gelöstes Magnesiumoxid ist;

c) die Magnesiumverbindung festes Magnesiumhydroxid ist;

d) die Kalkmilch einen $Ca(OH)_2$-Gehalt von 10 bis 30 Gewichts%, vorzugsweise von 12 bis 20 Gewichts%, aufweist;

e) die Sprühtrocknung der das stabilisierte Dicalciumphosphat-dihydrat enthaltenden Suspension mit im Gleichstrom geführter Heißluft erfolgt;

f) die Heißluft Temperaturen von 150 bis 350°C, vorzugsweise von 200 bis 300°C, aufweist;

g) die Zerstäubung der das stabilisierte Dicalciumphosphat-dihydrat enthaltenden Suspension mit einem Zerstäuberrad erfolgt;

h) das Zerstäuberrad mit Umfangsgeschwindigkeiten von 100 bis 200 m/s betrieben wird.

Eine Anlage zur Durchführung des erfindungsgemäßen Verfahrens, welche aus einem Rührreaktor, welcher über eine erste und eine zweite Leitung mit einem hochtourigen Mischorgan strömungsmäßig verbunden ist, einer in das hochtourige Mischorgan einmündende dritte Leitung zur Zuführung von Phosphorsäure, einem strömungsmäßig vor dem Rührreaktor angeordneten ersten, mit Rührwerk versehenen Slurry-Behälter und einem strömungsmäßig nach dem Rührreaktor angeordneten Zwischenbehälter besteht, kann dadurch gekennzeichnet sein, daß strömungsmäßig vor dem Rührreaktor ein zweiter Slurry-Behälter angeordnet ist; daß mehrere Zuführungsleitungen in den Rührreaktor einmünden; daß vom Zwischenbehälter eine in einen Sprühturm führende fünfte Leitung abgeht; daß die fünfte Leitung innerhalb des Sprühturmes oberhalb eines Zerstäuberrades endet; daß in den Sprühturm Heißluft-Leitungen einmünden; daß vom Sprühturm eine in ein Filter einmündende sechste Leitung abgeht; daß vom oberen Bereich des Filters eine Abluft-Leitung abgeht und daß der Boden des Filters von einer Produktleitung durchdrungen ist, über welche hochadsorptives Dicalciumphosphat-dihydrat abziehbar ist.

Mit dem erfindungsgemäßen Verfahren wird ein stabilisiertes Dicalciumphosphat-dihydrat mit einer Adsorptionskraft von 100 bis 130 g Wasser/100 g Dicalciumphosphat-dihydrat erhalten.

Beim Verfahren gemäß der Erfindung wird als alkalische Flüssigkeit Kalkmilch und als Magnesiumverbindung das Oxid oder Hydroxid verwendet, um in die resultierende Suspension des Dicalciumphosphat-dihydrates keine Fremdionen einzubringen.

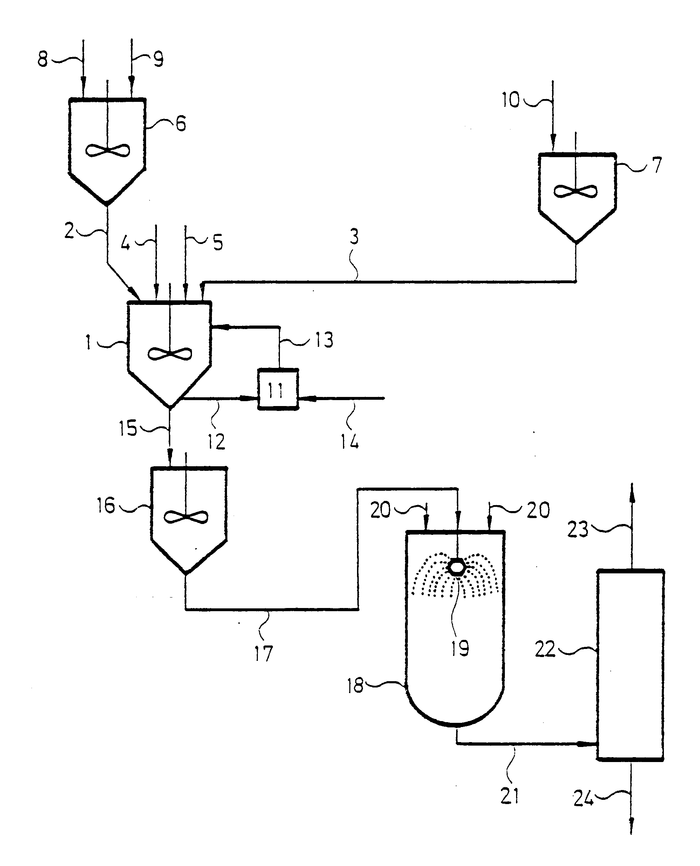

In der beigefügten Zeichnung ist eine Anlage zur Durchführung des erfindungsgemäßen Verfahrens schematisch dargestellt.

In einen Rührreaktor 1 münden mehrere Zuführungsleitungen (2, 3, 4, 5) ein, wobei die erste Zuführungsleitung 2 mit dem Bodenablaß eines ersten, mit Rührwerk versehenen Slurry-Behälters 6 verbunden ist, während die zweite Zuführungsleitung 3 vom Bodenablaß eines zweiten, mit Rührwerk versehenen Slurry-Behälters 7 abgeht; dabei führen in den ersten Slurry-Behälter 6 zwei Eintragsleitungen (8, 9) für Calciumcarbonat bzw. Wasser hinein. In den zweiten Slurry-Behälter 7 wird über eine Eintragsleitung 10 Kalkmilch zugeführt. Durch die dritte Zuführungsleitung 4 wird eine sauerstoffhaltige Magnesiumverbindung in den Rührreaktor 1 eingebracht, während über die vierte Zuführungsleitung 5 pulverförmiges Natriumpyrophosphat in den Rührreaktor 1 eingetragen wird. Vom unteren Bereich des Rührreaktors 1 geht eine zu einem hochtourigen Mischorgan 11 (beispielsweise ®SUPRATON der Fa. Krupp) führende erste Leitung 12 ab, während eine vom hochtourigen Mischorgan 11 ausgehende zweite Leitung 13 in den oberen Bereich des Rührreaktors 1 einmündet. Schließlich wird über eine dritte Leitung 14 Phosphorsäure in das hochtourige Mischorgan 11 eingebracht. Vom Bodenablaß des Rührreaktors 1 führt eine vierte Leitung 15 in einen mit Rührwerk versehenen Zwischenbehälter 16. Der Bodenablaß des Zwischenbehälters 16 ist strömungsmäßig über eine fünfte Leitung 17 mit einem mittig im oberen Bereich eines Sprühturmes 18 angeordneten Zerstäuberrad 19 verbunden, wobei in den Deckel des Sprühturmes 18 weiterhin mehrere Heißluft-Leitungen 20 einmünden. Vom Boden des Sprühturmes 18 geht eine sechste Leitung 21 ab, welche in den unteren Bereich eines Filters 22 einmündet. Während im Deckel des Filters 22 eine Abluft-Leitung 23 angeordnet ist, ist der Boden des Filters 22 von einer Produktleitung 24 durchdrungen, durch welche hochadsorptives Dicalciumphosphat-dihydrat abziehbar ist.

Beispiel 1

In einem mit Rührwerk versehenen Slurry-Behälter 6 (vergl. die Figur) wurden 30 l Wasser vorgelegt und darin 5 kg gefälltes Calciumcarbonat mit einem mittleren Korndurchmesser von 4 μm (®SOCAL P2 der Fa. Solvay) suspendiert.
Die Suspension wurde über die Zuführungsleitung 2 in einen Rührreaktor 1, welcher über Leitungen (12, 13) mit einem hochtourigen Mischorgan 11 nach dem Rotor-Stator-Prinzip (®ULTRA-TURRAX der Fa. Janke und Kunkel) in Verbindung stand, abgelassen. Beim Betrieb des hochtourigen Mischorgans 11 mit 8000 Upm wurden in das Mischorgan 7,5 kg Phosphorsäure (85 %ig) eingetragen. Beim Umsatz der Calciumcarbonat-Suspension mit der Phosphorsäure in der turbulenten Mischzone stellte sich unter Anstieg der Temperatur von 16 auf 32°C ein pH-Wert von 2,4 ein.
Die Umsetzung der Calciumcarbonat-Suspension mit der Phosphorsäure war nach etwa 5 Minuten abgeschlossen. Nun wurden über die Zuführungsleitung 4 150 g Magnesiumoxid-Pulver in den Rührreaktor 1 eingetragen, wodurch der pH-Wert des Reaktionsgemisches auf 2,8 anstieg.
Nach Zugabe von 10,4 kg Kalkmilch (12 %ig) aus dem mit Rührwerk versehenen Slurry-Behälter 7 via Zuführungsleitung 3 wurde im Reaktionsgemisch ein pH-Wert von 6,4 gemessen. Schließlich wurden in den Rührreaktor 1 über die Zuführungsleitung 5 als weiterer Stabilisator 110 g Natriumpyrophosphat eingetragen.

Das resultierende Reaktionsgemisch wurde aus dem Rührreaktor 1 in einen mit Rührwerk versehenen Zwischenbehälter 16 abgelassen, von welchem es über eine Leitung 17 einem zylindrischen Sprühturm 18 (Durchmesser und Höhe jeweils 290 cm) zugeführt wurde. Im Sprühturm 18 traf das Reaktionsgemisch auf ein Zerstäuberrad 19 (Durchmesser: 160 mm) auf, welches mit etwa 16000 Upm rotierte (entspricht einer Umfangsgeschwindigkeit von etwa 135 m/s). In den Sprühturm 18 wurde im Gleichstrom zum Reaktionsgemisch Heißluft mit Temperaturen von 250 bis 300°C (etwa 12 m³ Luft pro kg Reaktionsgemisch) eingeblasen.
Das getrocknete Produkt gelangte zusammen mit der Luft über eine Leitung 21 in ein Filter 22, in welchem es von der Luft abgetrennt wurde. Die über die Leitung 23 abströmende Abluft wies Temperaturen von 90 bis 35°C auf. Das aus der Produktleitung 24 entnehmbare Dicalciumphosphat-dihydrat war mit einer Adsorptionskraft von 115 g Wasser/100 g Dicalciumphosphatdihydrat hochadsorptiv und hatte diese Siebanalyse:

99,91 % < 75 μm
99,60 % < 44 μm

Beispiel 2

Beispiel 1 wurde mit der Änderung wiederholt, daß anstelle von 150 g Magnesiumoxid-Pulver in den Rührreaktor 1 über die Zuführungsleitung 4 180 g Magnesiumhydroxid eingetragen wurden.

Das aus der Produktleitung 24 entnehmbare Dicalciumphosphat-dihydrat wies eine Adsorptionskraft von 120 g Wasser/100 g Dicalciumphosphat-dihydrat und folgende Siebanalyse auf:

99,99 % < 75 μm
99,90 % < 44 μm

Beispiel 3

Beispiel 1 wurde mit der Änderung wiederholt, daß anstelle von 150 g Magnesiumoxid ein Gemisch von 1,5 kg Phosphorsäure (85 %ig), 1,7 l Wasser und 200 g Magnesiumoxid in das hochtourige Mischorgan 11 eingebracht wurden, bevor der Eintrag der restlichen Phosphorsäure (6,9 kg; 85 %ig) in das hochtourige Mischorgan erfolgte.

Das aus der Produktleitung 24 entnehmbare Dicalciumphosphat-dihydrat wies eine Adsorptionskraft von 118 g Wasser/100 g Dicalciumphosphat-dihydrat und folgende Siebanalyse auf:

99,94 % < 75 μm
99,90 % < 44 μm

Beispiel 4

In einem mit Rührwerk versehenen Slurry-Behälter 6 (vergl. die Figur) wurden 1500 l Wasser vorgelegt und darin 372 kg gefälltes Calciumcarbonat mit einem mittleren Korndurchmesser von 4 μm (®-SOCAL P2 der Fa. Solvay) suspendiert.

Die Suspension wurde über die Zuführungsleitung 2 in einen Rührreaktor 1, welcher über Leitungen (12, 13) mit einem hochtourigen Mischorgan 11 nach dem Rotor-Stator-Prinzip (®SUPRATON der Fa. Krupp) in Verbindung stand, abgelassen. Beim Betrieb des hochtourigen Mischorgans 11 mit 8000 Upm wurden in das Mischorgan 560 kg Phosphorsäure (77,4 %ig) eingetragen. Beim Umsatz der Calciumcarbonat-Suspension mit der Phosphorsäure in der turbulenten Mischzone stellte sich unter Anstieg der Temperatur von 14 auf 39°C ein pH-Wert von 2,4 ein.

Die Umsetzung der Calciumcarbonat-Suspension mit der Phosphorsäure war nach etwa 5 Minuten abgeschlossen. Nun wurden über die Zuführungsleitung 4 11 kg Magnesiumoxid-Pulver in den Rührreaktor 1 eingetragen.

Nach Zugabe von 575 l Kalkmilch (12 %ig) aus dem mit Rührwerk versehenen Slurry-Behälter 7 via Zuführungsleitung 3 wurde im Reaktionsgemisch ein pH-Wert von 6,7 gemessen. Schließlich wurden in den Rührreaktor 1 über die Zuführungsleitung 5 als weiterer Stabilisator 8,4 kg Natriumpyrophosphat eingetragen.

Das resultierende Reaktionsgemisch wurde aus dem Rührreaktor 1 in einen mit Rührwerk versehenen Zwischenbehälter 16 abgelassen, von welchem es über eine Leitung 17 einem zylindrischen Sprühturm 18 (Durchmesser und Höhe jeweils 290 cm) zugeführt wurde. Im Sprühturm 18 traf das Reaktionsgemisch auf ein Zerstäuberrad 19 (Durchmesser: 160 mm) auf, welches mit etwa 16000 Upm rotierte (entspricht einer Umfangsgeschwindigkeit von etwa 135 m/s). In den Sprühturm 18 wurde im Gleichstrom zum Reaktionsgemisch Heißluft mit Temperaturen von 250 bis 300°C (etwa 12 m³ Luft pro kg Reaktionsgemisch) eingeblasen.

Das getrocknete Produkt gelangte zusammen mit der Luft über eine Leitung 21 in ein Filter 22, in welchem es von der Luft abgetrennt wurde. Die über die Leitung 23 abströmende Abluft wies Temperaturen von 90 bis 95 °C auf. Das aus der Produktleitung 24 entnehmbare Dicalciumphosphat-dihydrat war mit einer Adsorptionskraft von 112 g Wasser/100 g Dicalciumphosphatdihydrat hochadsorptiv und hatte diese Siebanalyse:

99,92 % < 75 μm
99,90 % < 44 μm

**Patentansprüche**

1. Verfahren zur Herstellung von mit Dimagnesiumphosphat-trihydrat und Natriumpyrophosphat stabilisiertem Dicalciumphosphat-dihydrat, wobei man in einen mit Rührwerk versehenen Reaktor eine wäßrige Suspension von Calciumcarbonat einträgt und über ein mit dem unteren und dem oberen Bereich des Reaktors strömungsmäßig verbundenes hochtouriges Mischorgan mit einer Leistung von mehr als 3000 Upm im Kreislauf pumpt und wobei man in das Mischorgan eine mindestens zur quantitativen Bildung von Dicalciumphosphat-dihydrat ausreichende Menge Phosphorsäure einbringt und wobei man anschließend in den Reaktor eine Magnesiumverbindung einträgt und wobei man schließlich eine alkalische Flüssigkeit in den Reaktor bis zu einem pH-Wert von maximal 6,9 dosiert, bevor man Natriumpyrophosphat in den Reaktor einträgt, dadurch gekennzeichnet, daß das hochtourige Mischorgan mit einer Leistung von 3500 bis 8000 Upm, vorzugsweise von 5000 bis 7000 Upm, betrieben wird; daß die Magnesiumverbindung sauerstoffhaltig ist; daß die alkalische Flüssigkeit Kalkmilch ist und daß die resultierende Suspension mit einem Gehalt an stabilisertem Dicalciumphosphat-dihydrat von 20 bis 33 Gewichts% sprühgetrocknet wird.

2. Verfahren nach Anspruch 1, <u>dadurch gekennzeichnet</u>, daß die Magnesiumverbindung festes Magnesiumoxid ist.

3. Verfahren nach Anspruch 1, <u>dadurch gekennzeichnet</u>, daß die Magnesiumverbindung in Phosphorsäure gelöstes Magnesiumoxid ist.

4. Verfahren nach Anspruch 1, <u>dadurch gekennzeichnet</u>, daß die Magnesiumverbindung festes Magnesiumhydroxid ist.

5. Verfahren nach mindestens einem der Ansprüche 1 bis 4, <u>dadurch gekennzeichnet</u>, daß die Kalkmilch einen $Ca(OH)_2$-Gehalt von 10 bis 30 Gewichts%, vorzugsweise von 12 bis 20 Gewichts%, aufweist.

6. Verfahren nach mindestens einem der Ansprüche 1 bis 5, <u>dadurch gekennzeichnet</u>, daß die Sprühtrocknung der das stabilisierte Dicalciumphosphat-dihydrat enthaltenden Suspension mit im Gleichstrom geführter Heißluft erfolgt.

7. Verfahren nach Anspruch 6, <u>dadurch gekennzeichnet</u>, daß die Heißluft Temperaturen von 150 bis 350°C, vorzugsweise 200 bis 300°C, aufweist.

8. Verfahren nach mindestens einem der Ansprüche 1 bis 7, <u>dadurch gekennzeichnet</u>, daß die Zerstäubung der das stabilisierte Dicalciumphosphat-dihydrat enthaltenden Suspension mit einem Zerstäuberrad erfolgt.

9. Verfahren nach Anspruch 8, <u>dadurch gekennzeichnet</u>, daß das Zerstäuberrad mit Umfangsgeschwindigkeiten von 100 bis 200 m/s betrieben wird.

10. Anlage zur Durchführung des Verfahrens nach mindestens einem der Ansprüche 1 bis 9, bestehend aus einem Rührreaktor, welcher über eine erste und eine zweite Leitung mit einem hochtourigen Mischorgan strömungsmäßig verbunden ist, einer in das hochtourige Mischorgan einmündenden dritten Leitung zur Zuführung von Phosphorsäure, einem strömungsmäßig vor dem Rührreaktor angeordneten ersten, mit Rührwerk versehenen Slurry-Behälter und einem strömungsmäßig nach dem Rührreaktor angeordneten Zwischenbehälter, <u>dadurch gekennzeichnet</u>, daß oberhalb des Rührreaktors (1) ein zweiter Slurry-Behälter (7) angeordnet ist; daß mehrere Zuführungsleitungen (2, 3, 4, 5) in den Rührreaktor (1) einmünden; daß vom Zwischenbehälter (16) eine in einen Sprühturm (18) führende fünfte Leitung (17) abgeht; daß die fünfte Leitung (17) innerhalb des Sprühturmes (18) oberhalb eines Zerstäuberrades (19) endet; daß in den Sprühturm (18) Heißluft-Leitungen (20) einmünden; daß eine sechste Leitung (21) vom Sprühturm (18) in ein Filter (22) führt; daß vom oberen Bereich des Filters (22) eine Abluft-Leitung (23) abgeht und daß der Boden des Filters (22) von einer Produktleitung (24) durchdrungen ist, über welche hochadsorptives Dicalciumphosphat-dihydrat abziehbar ist.

## Claims

1. A process for the preparation of dicalcium phosphate dihydrate stabilized with dimagnesium phosphate trihydrate and sodium pyrophosphate, in which an aqueous suspension of calcium carbonate is introduced into a reactor equipped with a stirrer and recirculated via a high-speed mixer capable of more than 3000 rpm being in flow connection with the lower and upper portion of the reactor, an amount of phosphoric acid being at least sufficient for the quantitative formation of dicalcium phosphate dihydrate is introduced into the mixer, a magnesium compound is subsequently introduced into the reactor and finally an alkaline liquid is metered into the reactor up to a maximum pH of 6.9, before sodium pyrophosphate is introduced into the reactor, wherein the high-speed mixer is operated at 3,580 to 8,000 rpm, preferably at 5000 to 7000 rpm, the magnesium compound contains oxygen, the alkaline liquid is lime milk, and the resulting suspension, which has a stabilized dicalcium phosphate dihydrate content of 20 to 33% by weight, is spray-dried.

2. The process as claimed in claim 1, wherein the magnesium compound is solid magnesium oxide.

3. The process as claimed in claim 1, wherein the magnesium compound is magnesium oxide dissolved in phosphoric acid.

4. The process as claimed in claim 1, wherein the magnesium compound is solid magnesium hydroxide.

5. The process as claimed in at least one of claims 1 to 4, wherein the lime milk has a $Ca(OH_2)$ con-

tent of 10 to 30% by weight, preferably 12 to 20% by weight.

6. The process as claimed in at least one of claims 1 to 5, wherein the spray-drying of the suspension which contains the stabilized dicalcium phosphate dihydrate is carried out by means of co-current hot air.

7. The process as claimed in claim 6, wherein the hot air has a temperature of 150 to 350°C, preferably 200 to 300°C.

8. The process as claimed in at least one of claims 1 to 7, wherein the atomizing of the suspension containing the stabilized dicalcium phosphate dihydrate is carried out by means of an atomizer wheel.

9. The process as claimed in claim 8, wherein the atomizer wheel is operated at peripheral speeds of 100 to 200 m/s.

10. Apparatus for carrying out the process as claimed in at least one of claims 1 to 9, comprising a stirred reactor which is in flow connection with a high-speed mixer via a first and second line, a third line for introducing phosphoric acid which is connected to the high-speed mixer, a first slurry container equipped with stirrer and disposed upstream from the stirred reactor and an intermediate container disposed downstream from the stirred reactor, wherein a second slurry container (7) is disposed above the stirred reactor (1); a plurality of feed lines (2,3,4,5) open into the stirred reactor (1); a fifth line (17) leads from the intermediate container (16) to a spray tower (18); the fifth line (17) terminates within the spray tower (18) above an atomizer wheel (19); hot air lines (20) open into the spray tower (18); a sixth line (21) leads from the spray tower (18) to a filter (22); a waste gas line (23) leads from the upper region of the filter (22); and the bottom of the filter (22) is penetrated by a product line (24) through which highly adsorbent dicalcium phosphate dihydrate can be removed.

**Revendications**

1. Procédé de production de phosphate de dicalcium dihydraté stabilisé par du phosphate de dimagnésium trihydraté et du pyrophosphate de sodium, dans lequel on charge une suspension aqueuse de carbonate de calcium dans un réacteur muni d'un agitateur et on recycle à un organe de mélange à haute vitesse ayant une puissance supérieure à 3 000 tr/min, en relation d'écoulement avec la partie inférieure et la partie supérieure du réacteur, dans lequel on introduit dans l'organe de mélange une quantité d'acide phosphorique suffisant au moins pour la formation quantitative de phosphate de dicalcium dihydraté, dans lequel on charge ensuite un composé de magnésium dans le réacteur et dans lequel on ajoute finalement un liquide alcalin dans le réacteur jusqu'à l'obtention d'un pH de 6,9 maximum, avant de charger du pyrophosphate de sodium dans le réacteur, caractérisé en ce que l'organe de mélange à haute vitesse fonctionne à une puissance de 3 500 à 8 000 tr/min, de préférence de 5 000 à 7 000 tr/min ; que le composé de magnésium contient de l'oxygène ; que le liquide alcalin est du lait de chaux et que la suspension obtenue ayant une teneur en phosphate de dicalcium dihydraté stabilisé de 20 à 33 % en poids est séchée par pulvérisation.

2. Procédé selon la revendication 1, caractérisé en ce que le composé de magnésium est de l'oxyde de magnésium solide.

3. Procédé selon la revendication 1, caractérisé en ce que le composé de magnésium est de l'oxyde de magnésium dissous dans de l'acide phosphorique.

4. Procédé selon la revendication 1, caractérisé en ce que le composé de magnésium est de l'hydroxyde de magnésium solide.

5. Procédé selon au moins une des revendications 1 à 4, caractérisé en ce que le lait de chaux présente une teneur en $Ca(OH)_2$ comprise entre 10 et 30 % en poids, de préférence entre 12 et 20 % en poids.

6. Procédé selon au moins une des revendications 1 à 5, caractérisé en ce que le séchage par pulvérisation de la suspension contenant du phosphate de dicalcium dihydraté stabilisé s'effectue à l'aide d'air chaud acheminé en un courant parallèle.

7. Procédé selon la revendication 6, caractérisé en ce que l'air chaud présente des températures comprises entre 150 et 350°C, de préférence entre 200 et 300°C.

8. Procédé selon au moins une des revendications 1 à 7, caractérisé en ce que l'atomisation de la suspension contenant le phosphate de dicalcium dihydraté stabilisé s'effectue à l'aide d'un disque atomiseur.

9. Procédé selon la revendication 8, caractérisé en ce que le disque atomiseur fonctionne à des vitesses périphériques de 100 à 200 m/s.

10. Installation de mise en oeuvre du procédé selon au moins une des revendications 1 à 9, composée d'un réacteur à agitateur en relation d'écoulement par l'intermédiaire d'une première et d'une seconde conduite avec un organe de mélange à haute vitesse, d'une troisième conduite destinée à l'acheminement d'acide phosphorique, débouchant dans l'organe de mélange à haute vitesse, d'un premier récipient à suspension épaisse, disposé en relation d'écoulement en amont du réacteur à agitateur et muni d'un agitateur, et d'un récipient intermédiaire disposé en relation d'écoulement en aval du réacteur à agitateur, caractérisée en ce qu'un second récipient à suspension épaisse (7) est disposé au-dessus du réacteur à agitateur (1) ; que plusieurs conduites d'acheminement (2, 3, 4, 5) débouchent dans le réacteur à agitateur (1) ; qu'une cinquième conduite (17) aboutissant dans une tour de pulvérisation (18) part du récipient intermédiaire (16) ; que la cinquième conduite (17) se termine à l'intérieur de la tour de pulvérisation (18) au-dessus d'un disque atomiseur (19) ; que des conduites d'air chaud (20) débouchent dans la tour de pulvérisation (18) ; qu'une sixième conduite (21) mène de la tour de pulvérisation (18) à un filtre (22); qu'une conduite d'évacuation d'air (23) part de la partie supérieure du filtre (22) et que le fond du filtre (22) est traversé par une conduite de produit (24) permettant de soutirer du phosphate de dicalcium dihydraté très adsorbant.